# EUROPEAN PATENT SPECIFICATION

(11) **EP 2 028 790 B1**
(45) Date of publication and mention of the grant of the patent: **26.05.2010**
(21) Application number: 07721461.7
(22) Date of filing: 15.06.2007
(51) Int. Cl.: H04L 12/24

(54) **METHOD FOR EQUIPMENT QUALITY CHECK, METHOD AND DEVICE FOR AUTOMATICALLY ADAPTING QUALITY CHECK DATA**
VERFAHREN ZUR GERÄTEQUALITÄTSPRÜFUNG, VERFAHREN UND VORRICHTUNG ZUR AUTOMATISCHEN ANPASSUNG DER QUALITÄTSÜBERPRÜFUNGSDATEN
PROCÉDÉ DESTINÉ À VÉRIFIER LA QUALITÉ D'UN ÉQUIPEMENT, PROCÉDÉ ET DISPOSITIF DESTINÉS À AUTOMATIQUEMENT ADAPTER LES DONNÉES DE VÉRIFICATION DE QUALITÉ

(30) Priority: 19.06.2006 CN 200610082900
(43) Date of publication of application: 25.02.2009
(73) Proprietor: Huawei Technologies Co., Ltd., Longgang District, Shenzhen Guangdong 518129 (CN)
(72) Inventor: HU, Yi, Shenzhen Guangdong 518129 (CN); LEI, Ying, Shenzhen Guangdong 518129 (CN)
(74) Representative: Thun, Clemens
(86) International application number: PCT/CN2007/001888
(87) International publication number: WO 2008/000143

(56) References cited:
- CN-A- 1 635 497
- CN-A- 1 760 833
- CN-A- 1 760 833
- US-A1- 2004 044 992
- US-A1- 2005 154 553
- US-B1- 6 715 108
- US-B1- 6 778 934

## Description

This application claims a priority from the Chinese Patent Application No. 200610082900.0, filed with the Chinese Patent Office on June 19, 2006 and entitled "QC Method".

### FIELD OF THE INVENTION

The present invention relates to the field of equipment maintenance, and in particular, to a Quality Check (QC) method, a method and an apparatus for adapting QC data automatically.

### BACKGROUND

With the expansion of communication scale and the elevated requirements on the service quality imposed by the operator, the operator and the equipment provider must perform QC for the equipment during operation of network equipment in order to ensure normal operation of network equipment.

The equipment QC is a process of checking for data configuration errors and pitfalls of the equipment as against the equipment QC data. The equipment QC data is a description of all information required for performing QC for a type of equipment, including but not limited to: equipment configuration data, log records, track files, alarm data and equipment state data. Equipment QC modes include online check, offline check, and combination thereof. Offline check is to export the equipment data manually or through a tool, and then analyze the data through a QC apparatus. Online check is that: an equipment QC apparatus uses the protocol interfaces (such as MML protocol interface, Telnet protocol interface, and binary protocol interface) provided by the equipment to query the equipment data in real time and analyze the data. Combination of online check and offline check means that: a part of the equipment data analysis is performed in the online mode, and the remaining part is performed in the offline mode.

There are multitudinous equipments, and different equipments require different check items. Even for the same equipment, the check items are different if the equipment version is different. Even for the same check item, the data contents to be checked, data collection method and data analysis methods may be different due to difference of equipment versions. Therefore, the equipment check items as a whole are massive. In the actual test, it is difficult for the QC apparatus developer to select proper QC data.

Currently, the QC data is maintained in the following three ways:
(I) maintaining the maintenance checklist in the equipment QC apparatus: in the process of developing the equipment QC apparatus, a checklist is maintained inside the equipment QC apparatus for different versions of the same equipment; the checklist is hard-coded inside the check apparatus. Therefore, the functions of each check item in a checklist are also implemented inside the check apparatus. Namely, equipment QC data is developed at the same time of developing the equipment QC apparatus. Different equipment models and versions correspond to different QC checklists.
(II) setting equipment models and versions manually: before beginning of equipment QC, the equipment model and version are searched out by certain means. According to the actual model and version of the equipment, the check items of the equipment are configured inside the equipment QC apparatus manually one by one. Namely, an equipment QC apparatus is developed first, and then the equipment QC data are developed in the equipment QC apparatus according to the actual conditions. In the actual check process, the QC apparatus selects the corresponding checklist to perform QC for the equipment according to the configured check items.
(II) configuring check items of communication equipment through configuration files: before beginning of equipment QC, the check items of all equipments are configured through configuration files; in the actual check process, the equipment model and version are searched out first by certain means. According to the actual model and version of the equipment, the QC apparatus selects the corresponding QC checklist to perform QC for the equipment by reference to the check items in the configuration file.

In the process of researching the present invention, the inventor discovers at least the following weaknesses of the prior art: as regards the method that maintains the checklist inside the equipment QC apparatus, the equipment QC data is set on the check apparatus specific to an equipment, and is not sharable by different apparatuses of different equipments. Therefore, even if plenty of repetitive QC data exist on the equipments of different models, the QC data have to be developed and maintained separately.

As regards the method that sets equipment models and versions manually, the user has to configure the check items of the equipment manually. Therefore, if there is much equipment and/or many check items to be checked, the workload will be huge, and the check efficiency will be low. Moreover, the check items are configured manually on the QC equipment, which means the development of the QC data is not really independent of the QC apparatus.

As regards the method that configures the check items of the communication equipment through configuration files, the configuration files need to be edited beforehand for all equipments. If there is much equipment to be handled, the workload will be very high. Moreover, after upgrade and expansion of the equipment, the configuration files have to be updated one by one, which also involves huge workload.

Therefore, the prior art brings the problems of huge workload and complex update in the QC process of the equipment. With the increase of network equipment, such problems bring more maintenance pressure and more maintenance costs.
US patent No. 20050154553 discloses a methods, systems, and computer program products for enhanced Universal Plug and Play ("UPnP.TM.") compliance testing. A control point (e.g., a computer system) and one or more devices (e.g., printers, wireless gateways, etc.) are network connectable (or are connected) to a common network. The control point includes a test tool that can execute scripts to simulate UPnP.TM. functionality. Using scripts allows more flexible and programmatic UPnP.TM. compliance testing. Multiple devices can be selected for testing, thereby reducing the burden associated with individually testing devices on an isolated network. Test logs can be secured using digital signatures to reduce the likelihood of test logs being intentionally or inadvertently altered prior to being received at a certification authority.
US patent No. 6,715,108 discloses a method of and system for managing test case versions in which each test case version is associated with an application program load version. A set of test case versions is maintained in a test case library or database. Each test case version is identified in the test case library by date order sequence number. A test case version is selected for use with respect to a particular application program version selecting a subset of test case versions from the set of test case versions. The subset includes test case versions, if any, associated with the particular application program version and test case versions associated with application program versions earlier than the particular application program version. The method selects the latest application program version included in the subset of test case versions. The method then selects the latest test case version from the versions for the selected latest application program version.

### SUMMARY

The present invention provides a method and an apparatus for equipment QC in order to separate the development of the equipment QC data from the development of the equipment QC apparatus, select the check items automatically, reduce the workload, and make it convenient to share QC data packages between different QC apparatuses, use and update QC data packages between different platforms.

According to the invention these objects are solved by a method according to claim 1 and by an apparatus according to claim 7.

### BRIEF DESCRIPTION OF THE DRAWINGS

Figure 1 is a flowchart of the method provided in an embodiment of the present invention;

Figure 2 is a flowchart of the method for setting QC data according to an embodiment of the present invention; and

Figure 3 is a flowchart of the method for executing applicable check items according to the method shown in Figure 1.

### DETAILED DESCRIPTION

The equipment QC method provided in an embodiment of the present invention overcomes the high workload involved in configuration and update in the case that there is much equipment to be handled.

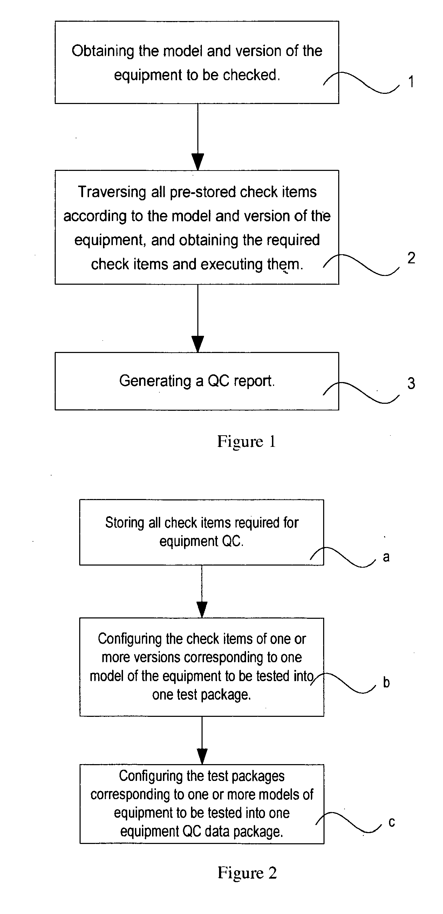

As shown in Figure 1, the equipment QC method provided in an embodiment of the present invention includes the steps as detailed hereinafter.

Step 1 indicates obtaining of the model and version of the equipment to be checked.

Step 2 indicates traversing of all pre-stored check items according to the obtained model and version of the equipment, obtaining of the required check items, and performing equipment QC against the required check items, wherein the check items cover all applicable check items stored beforehand because they derive from traversal based on equipment model and version.

Step 3 indicates generation of a QC report.

Through the previous technical solutions, the QC apparatus searches for applicable equipment QC data automatically after obtaining the model and version of the equipment, thus avoiding the operation of configuring the equipments manually one by one, saving time and improving the check efficiency.

The QC apparatus obtains the equipment model and version information by running a pre-stored script function designed to query the model and version of equipment.

The equipment QC data involved in this method can be set in a centralized way described below. Figure 2 shows the steps of developing equipment QC data before beginning of equipment QC, including:
step a: storing all the pre-stored check items required for equipment QC, wherein each pre-stored check item includes basic information, a test script and an auxiliary script.

The apparatus for storing all check items may be a database, or other apparatus that can import and export data such as a text file.

For ease of searching, the following steps can be applied additionally:
step b: configuring a test package which contains the check items, and more particularly, configuring the check items of one or more versions corresponding to one model of the equipment to be tested into one test package; and
step c: configuring an equipment QC data package which contains test packages, and more particularly, configuring all test packages corresponding to one or more types of equipment into an equipment QC data package.

Compared with the prior art that designs a QC apparatus according to the equipment, the present invention organizes the equipment QC data hierarchically, so that the QC apparatus can search out check items of all known equipments at a time. Therefore, the development does not necessarily rely on the type or version of the equipment, thus separating the development of the equipment QC contents from the development of the QC apparatus, avoiding repetitive setting of the equipment QC contents and reducing workload.

A check item is a basic unit of checking the equipment, and each check item corresponds to a content to be checked for the equipment.

The extension of a check item varies with the quantity of contents to be checked. A check item may be as large as a system, or as small as a board or component. Depending on the size of the extension of the check item, check items are sorted into different levels, and a check item can include several child check items.

Namely, the procedure of setting equipment QC data may further include: in each test package, organizing the check items hierarchically, and more particularly, setting a specific level for each check item, for example, setting the level of check item X to "1", setting the levels of check items A and B to "2", and setting the levels of check items C, D, E and F to "3".

There must be one unique check item corresponding to the top level. In this embodiment, the top level is "1", which is set as a root check item; and the levels of the remaining check items are lower than the level of the root check item.

For any check item lower than the top-level check item, a specific check item is set as a child check item of the check item on one higher level; accordingly, the check item on one higher level is the parent check item of the specific check item. For example, in the check items A, B, C, D, E, and F mentioned above, C, D, E and F are on the same level, A and B are check items on one higher level above C, D, E and F; therefore, C, D and E are set as child check items of A, and F is set as a child check item of B. In this way, A is a parent check item of C, D and E; C, D and E are child check items of A, and are brother check items; B is a parent check item of F, and F is a child check item of B. Alternatively, C, D, E and F are set as child check items of A, B has no child check item. In this way, C, D, E and F are brother check items, and have the common parent check item "A".

The version information of any child check item is set as a subset of the version information of its parent check item. For example, if the parent check item corresponds to versions V1 and V2, the version corresponding to its child check items must be V1 and/or V2. Supposing that C, D, E and F are set as child check items of A, if the version of C and D is set to "1.1.1", the version of E and F is set to "1.2.1", the version of A must be compatible with at least version 1.1.1 and version 1.2.1. Conversely, if the version of A is set to "1.1.1" and "1.2.1", C, D, E and F must not correspond to any version information other than 1.1.1 and 1.2.1.

Except the root check item, any check item has at most one parent check item. For example, it is not possible for C to be a child check item of A and B concurrently. The root check item has no parent check item.

In this embodiment, a root check item X exists, and A and B are child check items of X.

The check items are sorted into different levels to form a tree structure, thus enabling traversal performed mathematically. This improves the search efficiency and saves the resources compared with the disorderly searching or sequential searching of check items.

The basic information of a check item in this embodiment includes:
check item ID: an unique identifier of the check item;
check item title: brief description of the check item;
check item description: detailed description of the check item;
equipment version: equipment version to which the check item is applicable, for example, V1.1.1, V1.2.1; if the value is empty, it indicates that the check item is applicable to all versions;
parent check item ID: the check item ID of the upper-level check item; each check item can have at most one upper-level check item;
list of child check item IDs: a list of check item IDs of the lower-level check items; each check item can have 0, 1 or more lower-level check items;
script module name: name of the python script module where the interface function is executed; and
name of execution interface function: name of the script interface function that executes the check item. This attribute is valid to the auto execution mode.

A test package includes two parts: basic information and the script file contained in the test package. The basic information of a test package in this embodiment includes:
test package title: brief description of the test package;
test package description: detailed description of the test package, for example, string type;
equipment version: list of equipment versions to which the test package is applicable, for example, V1.1.1, V1.2.1;
check item: check item(s) contained in this test package. A test package may include multiple check items;
script module name: name of the python script module where the preprocessing interface function and the post-processing interface function are defined;
preprocessing interface function name: name of the script interface function for preprocessing the quality check items in this test package before execution. The pre-processing interface function is designed to set the running environment of the test package, for example, apply for resources, create a connection with the network, and create a mapping to the memory;
post-processing interface function name: name of the script interface function for post-processing the check items after all check items in this test package are scheduled and executed. The post-processing interface function is designed to release the occupied resources after completion of test package checking.

An equipment QC data package is an aggregate of test package lists, help files and certain common auxiliary scripts specific to one or more types of equipment (equipment type herein refers to technical type of equipment) such as network equipment, and digital communication equipment. Therefore, the equipment QC data package is a description of all information required for executing QC for a type of equipment.

An equipment QC data package includes two parts: basic information and the files contained in it, including script files and help files. In this embodiment, the basic information of an equipment QC data package includes:
name: brief description of the equipment QC data package;
type: professional technical field of the product, for example, radio product, data communication product, and optical transmission product;
equipment model: list of equipment models to which the equipment QC data package is applicable, for example, product A, product B;
test package list: list of names of one or more test packages;
help file name: help file of the equipment QC data package;
script module name: name of the python script module where the function of querying equipment model and version is defined;
name of function of querying equipment model and version: name of the script function for reading equipment model and version.

Therefore, before beginning of the QC, the information about QC of the equipment of all models and versions is stored through a database, so that the equipment QC data (including the equipment QC data package, test package, and check items) is developed at a single attempt independently of the development of the equipment QC apparatus. As a result, the equipment QC data is independent of the specific QC apparatus and specific information about the model and version of equipment; different QC apparatuses are sharable, which makes the equipment QC data highly upgradeable and scalable. Besides, the QC data are set and organized hierarchically, which facilitates sorting and invoking and enables pertinent searching. For example, after an equipment model is known, the equipment QC data package is determined; according to the version information, the test package in this equipment QC data package can be searched out, without the need of searching for all test packages.

Moreover, the procedure of setting equipment QC data occurs before the actual equipment QC process, thus saving the trouble of setting the equipment QC data for every QC process. Without increasing the information about the model or version of the network equipment, the initially set equipment QC data are always valid.

In this embodiment, an XML file describes the equipment QC data packages, test packages, and check items. Based on the cross-platform feature of the XML file, the equipment QC data packages, test packages and check items can be used between different platforms.

In the actual QC process, the QC is performed on the equipment automatically through a network, so it is necessary to obtain the IP address of the equipment first. Therefore, the details of step 1 are: The user configures the IP addresses of the equipments to be checked; according to the IP addresses, the QC apparatus obtains the models and versions of the equipments to be checked. In this way, the user avoids the trouble of executing the manual query operations repeatedly; instead, the query operation can be performed through repeated execution of the script function of obtaining equipment models and versions.

However, in the case that the equipments are numerous, a heavy workload will be generated if the equipment IP addresses are configured one by one. Therefore, the details of step 1 may also be: The IP addresses of the equipments to be checked are obtained through automatic search; according to the IP addresses, the QC apparatus obtains the models and versions of the equipments to be checked.

In the present invention, a script language can be executed to traverse all pre-stored check items in step 2, obtain all the applicable check items, and execute the check items one by one. Based on the cross-platform feature of the script language, the equipment QC data packages, test packages and check items can be used between different platforms.

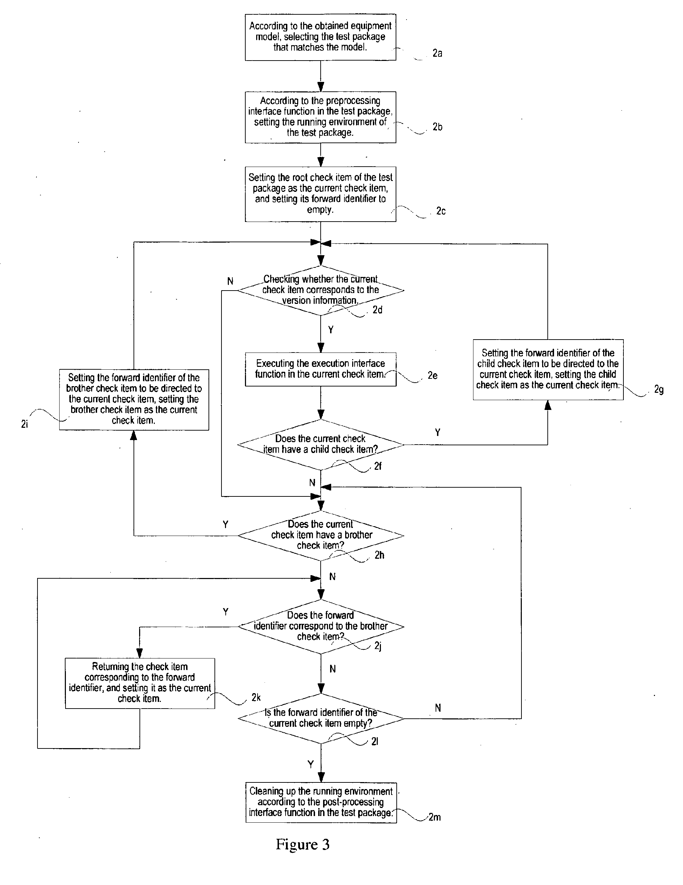

As shown in Figure 3, the details of step 2 are detailed hereinafter.

Step 2a: Comparing the obtained equipment model with the equipment model information described in the equipment QC data package, and selecting the test package that matches the equipment model information automatically.

Step 2b: Setting the running environment of the test package according to the preprocessing interface function in the test package.

Step 2c: Initializing the test package, setting the root check item of the test package as the current check item, and setting the forward identifier of the current check item to empty, wherein the forward identifier is marked by the processing process in the test equipment automatically.

Step 2d: Checking whether the current check item corresponds to the version information in step 1: if so, the procedure proceeds to step 2e, or else step 2h.

Step 2e: Executing the execution interface function in the current check item, namely, executing the check contents in the check item.

Step 2f: Checking whether the current check item has a child check item; if so, the procedure proceeds to step 2g, or else step 2h.

Step 2g: Setting the forward identifier of the child check item to be directed to the current check item, and setting the child check item as the current check item; and then performing step 2d.

Step 2h: Checking whether the current check item has a brother check item: if so, the procedure proceeds to step 2i, or else step 2j. With the mark of the forward identifier, the check items that have been checked will not be included in the process of checking whether the check item has a brother check item.

Step 2i: Setting the forward identifier of the brother check item to be directed to the current check item, setting the brother check item as the current check item, and then performing step 2d.

Step 2j: Judging whether the check item corresponding to the forward identifier of the current check item is a brother check item of the current check item: if so, it indicates that all the contents under the parent check item of the current check item have been finished, and the procedure goes to 2k; otherwise, the forward identifier corresponds to the parent check item of the current check item, and it is necessary to set the check item corresponding to the forward identifier as the current check item and perform step 21.

Step 2k: Returning the check item corresponding to the forward identifier of the current check item, setting the check item corresponding to the forward identifier as the current check item, and repeat step 2j. After completion of this step, the parent check item of the current check item is returned.

Step 21: Checking whether the forward identifier of the current check item is empty; if so, the procedure proceeds to step 2m, or else step 2h.

Step 2m: Cleaning up the running environment according to the post-processing interface function in the test package.

In the matching test package, supposing that X is a root check item; A and B are child check items of X; C, D and E are set as child check items of A; F is set as a child check item of B, the procedure of executing all applicable check items in step 2 according to the first embodiment includes the steps as detailed hereinafter.

Step 201: Initializing the test package, setting the root check item "X" of the test package as the current check item, and setting the forward identifier of X to empty.

Step 202: Checking whether the current check item "X" corresponds to the version information; executing the execution interface function of the current check item "X", namely, executing the root check item "X" to perform the corresponding inspection.

Step 203: Checking that the current check item "X" has a child check item "A", directing the forward identifier of the child check item "A" to the current check item "X", and setting the child check item "A" as the current check item, namely, the current check item changes from X to A.

Step 204: Checking that the versions, to which the current check item "A" is applicable, are 1.1.1 and 1.2.1 and correspond to the current version information "1.1.1"; hence executing the execution interface function of the current check item "A", namely, executing the child check item "A".

Step 205: Checking that the current check item "A" has a child check item "C", directing the forward identifier of the child check item "C" to the current check item "A", and setting the child check item "C" as the current check item namely, the current check item changes from A to C.

Step 206: Checking that the version, to which the child check item is applicable, is "1.1.1" and corresponds to the current version information, and executing the child check item "C".

Step 207: Checking that the current check item "C" has no child check item.

Step 208: Checking that the current check item "C" has a brother check item "D", directing the forward identifier of the brother check item "D" to the current check item "C", and setting the brother check item "D" as the current check item namely, the current check item changes from C to D.

Step 209: Checking that the version, to which the brother check item "D" is applicable, is "1.2.1" and does not correspond to the current version information.

Step 210: Checking that the current check item "D" has a brother check item "E", directing the forward identifier of the brother check item "E" to the current check item "D", and setting the brother check item "E" as the current check item namely, the current check item changes from D to E.

Step 211: Checking that the versions, to which the brother check item "E" is applicable, are "1.1.1" and "1.2.1" and correspond to the current version, and executing the current check item "E".

Step 212: Checking that the current check item "E" has no child check item.

Step 213: Checking that the current check item "E" has no brother check item.

Step 214: Checking that the forward identifier of the current check item "E" corresponds to the brother check item "D", and hence returning a check item "D" and setting the check item "D" as the current check item.

Step 215: Checking that the forward identifier of the current check item "D" corresponds to the brother check item "C", and hence returning a check item "C" and setting the check item "C" as the current check item.

Step 216: Checking that the forward identifier of the current check item "C" corresponds to the parent check item "A" which is not a brother check item of the current check item, and hence setting the parent check item "A" as the current check item.

Step 217: Checking that the forward identifier of the current check item corresponds to the check item "X" rather than being empty.

Step 218: Checking that the current check item "A" has a brother check item "B", directing the forward identifier of the brother check item "B" to the current check item "A", and setting the brother check item "B" as the current check item, namely, the current check item changes from A to B.

Step 219: Checking that the version, to which the current check item "B" is applicable, is "1.2.1" and does not correspond to the current version.

Step 220: Checking that the current check item "B" has no unchecked brother check item.

Step 221: Checking that the forward identifier of the current check item "B" corresponds to the brother check item "A", and hence returning a check item "A" and setting the check item "A" as the current check item.

Step 222: Checking that the forward identifier of the current check item "A" corresponds to the parent check item "X" which is not a brother check item of the current check item, and hence setting the parent check item "X" as the current check item.

Step 223: Checking that the forward identifier of the current check item "X" is empty.

Step 224: Cleaning up the running environment according to the post-processing interface function in the test package.

The first embodiment described above deals with the circumstance where the check item "B" does not match the version. In the case that the check item "B" matches the version, the procedure of executing all applicable check items in step 2 according to the second embodiment includes the steps as detailed hereinafter.

Steps 201' - 218': same as steps 201 - 218.

Step 219': Checking that the versions, to which the brother check item "B" is applicable, are "1.1.1" and "1.2.1" and correspond to the current version, and hence executing the current check item "B".

Step 220': Checking that the current check item "B" has a child check item "F", directing the forward identifier of the child check item "F" to the current check item "B", and setting the child check item "F" as the current check item, namely, the current check item changes from B to F.

Step 221': Checking that the version, to which the current check item "F" is applicable, is "1.2.1" and does not correspond to the current version.

Step 222': Checking that the current check item "F" has no brother check item.

Step 223': Checking that the forward identifier of the current check item "F" corresponds to the parent check item "B" which is not a brother check item of the current check item, and hence setting the parent check item "B" as the current check item.

Step 224': Checking that the current check item "B" has no unchecked brother check item.

Step 225': Checking that the forward identifier of the current check item "B" corresponds to the brother check item "A", and hence returning a check item "A" and setting the check item "A" as the current check item.

Step 226': Checking that the forward identifier of the current check item "A" corresponds to the parent check item "X" which is not a brother check item of the current check item, and hence setting the parent check item "X" as the current check item.

Step 227': Checking that the forward identifier of the current check item "X" is empty.

Step 228': Cleaning up the running environment according to the post-processing interface function in the test package.

The second embodiment described above deals with the circumstance where the child check item "F" does not correspond to the current version. In the case that it corresponds, the procedure of executing all applicable check items in step 2 according to the third embodiment includes the steps as detailed hereinafter.

Steps 201" - 220": same as steps 201' - 220'.

Step 221": Checking that the version, to which the current check item "F" is applicable, is "1.1.1" and corresponds to the current version, and hence executing the current check item "F".

Step 222": Checking that the current check item "F" has no child check item.

Step 223": Checking that the current check item "F" has no brother check item.

Steps 224" - 229": same as steps 223' - 228'.

The previous embodiments 1, 2 and 3 are about processes of executing all applicable check items in different circumstances. Evidently, the conception of preamble traversal of a tree is applied to such processes to traverse all equipment QC data set in a centralized way, thus ensuring traversal of all check items that meet the conditions; no further traversal is performed once a parent check item that mismatches the version is found, thus saving the time and resources.

As expounded above, by obtaining the check items applicable to the equipment automatically, the embodiments of the present invention avoid manual configuration of check items, and improve the efficiency of equipment QC.

Further, all check items for known equipments are set in a centralized way, and the development of the equipment QC contents is separated from the development of the equipment QC apparatus, thus avoiding the trouble of setting the equipment QC contents repeatedly for different equipment QC apparatuses and reducing the workload, especially in a massive network quality check.

The check items are set in a centralized way, so that the QC data can be organized and managed uniformly and maintained separately, and are highly scalable and upgradeable.

The check items set in a centralized way are independent of the equipment QC apparatus, thus enabling sharing of QC data between multiple QC apparatuses and using of the QC data between different platforms.

Moreover, the QC data are set and organized hierarchically, thus avoiding the judgment on impertinent data and improving the efficiency of equipment QC.

Although detailed description is made above for the preferred embodiments of this invention to describe rather than restrict the technical solution of the present invention, it is to be understood that those skilled in the field can make various modifications and equivalent substitutions to this invention.

## Claims

1. An equipment Quality Check, QC, method, comprising:
configuring pre-stored check items of one or more versions corresponding to one model of equipments to be tested into a test package;
obtaining a model and version of each equipment to be checked; and
searching automatically for IP addresses of equipments to be checked; according to the IP addresses
traversing all pre-stored check items according to the model and version of the equipment, obtaining required check items, and performing equipment QC against the required check items;
**characterized in that**: in each of the test packages, organizing the pre-stored check items hierarchically, further comprising: setting a specified level for each of the pre-stored check items; setting a check item corresponding to the top level of the pre-stored check items uniquely as a root check item; setting a check item on any level lower than the top level of the pre-stored check items as a child check item of the upper-level check item; setting a version information of any child check item as a subset of the version information of its parent check item; wherein except the root check item, each pre-stored check item can have at most one parent check item.

2. The equipment QC method of claim 1, wherein each of the pre-stored check items comprises basic information, a test script and an auxiliary script.

3. The equipment QC method of claim 2, further comprising:
configuring all test packages corresponding to one or more types of equipment into an equipment QC data package.

4. The equipment QC method according to any of claim 2 to claim 3, wherein a basic information of each pre-stored check item comprises: check item ID, check item title, check item description, equipment version, parent check item ID, list of child check item IDs, script module name, and name of execution interface function.

5. The equipment QC method of claim 3, wherein: the test package comprises: test package title, test package description, equipment version, check item, script module name, name of preprocessing interface function, and name of post-processing interface function.

6. The equipment QC method of claim 5, wherein the procedure of traversing all pre-stored check items, obtaining the required check items and performing the equipment QC against the required check items comprises:
step 2a: comparing the obtained equipment model with the equipment model information described in the equipment QC data package, and selecting the test package that matches the equipment model information automatically;
step 2b: according to a preprocessing interface function in the test package, setting a running environment of the test package;
step 2c: initializing the test package, setting the root check item of the test package as a current check item, and setting the forward identifier of the root check item to empty;
step 2d: checking whether the current check item corresponds to the version information; if so, the procedure proceeds to step 2e, or else step 2h;
step 2e: executing the execution interface function in the current check item;
step 2f: checking whether the current check item has a child check item; if so, the procedure proceeds to step 2g, or else step 2h;
step 2g: setting the forward identifier of the child check item to be directed to the current check item, and setting the child check item as the current check item; and then performing step 2d;
step 2h: checking whether the current check item has a brother check item; if so, the procedure proceeds to step 2i, or else step 2j;
step 2i: setting the forward identifier of the brother check item to be directed to the current check item, setting the brother check item as the current check item; and then performing step 2d;
step 2j: checking whether the forward identifier of the current check item corresponds to the brother check item of the current check item; if so, the procedure proceeds to step 2k; otherwise, setting the check item corresponding to the forward identifier as the current check item, and performing step 21;
step 2k: returning the check item corresponding to the forward identifier of the current check item, and setting check item corresponding to the forward identifier as the current check item, and performing step 2j again;
step 21: checking whether the forward identifier of the current check item is empty; if so, the procedure proceeds to step 2m, or else step 2h; and
step 2m: cleaning up the running environment according to the post-processing interface function in the test package.

7. An equipment Quality Check, QC, apparatus, comprising:
an information obtaining unit, adapted to search automatically for IP addresses of the equipments to be checked; according to the IP addresses, obtain an information about a model and version of each equipment to be checked;
a setting & storing unit, adapted to configure all pre-stored check items of one or more versions corresponding to one model of the equipment to be tested into a test package;
a traversing unit, adapted to traverse all pre-stored check items according to the model and version of the equipment, and obtaining the required check items; and
a QC executing unit, adapted to execute the equipment QC against the check items;
**characterized in that**: in each test package of the setting & storing unit, set a specified level for each of the pre-stored check items; set a check item corresponding to the top level uniquely as a root check item; set a check item on any level lower than the top level as a child check item of the upper-level check item; set the version information of any child check item as a subset of the version information of its parent check item; except the root check item, any pre-stored check item can have at most one parent check item.

8. The equipment QC apparatus according to claim 7, wherein:
the setting & storing unit, further adapted to: set and store all check items required for equipment QC, wherein each check item comprises basic information, a test script and an auxiliary script; configure all test packages corresponding to one or more types of equipment into an equipment QC data package.

## Patentansprüche

1. Qualitätsprüf- bzw. QC-Verfahren für Geräte, mit den folgenden Schritten:
Konfigurieren vorgespeicherter Prüfposten einer oder mehrerer Versionen entsprechend einem Modell der zu testenden Geräte zu einem Testpaket;
automatisches Suchen nach IP-Adressen von zu prüfenden Geräten;
Erhalten eines Modells und einer Version jedes zu prüfenden Geräts gemäß den IP-Adressen; und
Durchqueren aller vorgespeicherten Prüfposten gemäß dem Modell und der Version der Geräte, Erhalten erforderlicher Prüfposten und Ausführen einer Geräte-QC anhand der erforderlichen Prüfposten;
**dadurch gekennzeichnet, dass** in jedem der Prüfpakete die vorgespeicherten Prüfposten hierarchisch organisiert werden, ferner mit den folgenden Schritten:
Setzen einer spezifizierten Ebene für jeden der vorgespeicherten Prüfposten; Setzen eines Prüfpostens entsprechend der obersten Ebene der vorgespeicherten Prüfposten eindeutig als einen Wurzelprüfposten; Setzen eines Prüfpostens auf einer beliebigen Ebene, die niedriger als die oberste Ebene der vorgespeicherten Prüfposten ist, als einen untergeordneten Prüfposten des Prüfpostens der oberen Ebene; Setzen einer Versionsinformation eines beliebigen untergeordneten Prüfpostens als eine Teilmenge der Versionsinformationen seines übergeordneten Prüfpostens; wobei mit Ausnahme des Wurzelprüfpostens jeder vorgespeicherte Prüfposten höchstens einen übergeordneten Prüfposten aufweisen kann.

2. Geräte-QC-Verfahren nach Anspruch 1, wobei jeder der vorgespeicherten Prüfposten grundlegende Informationen, ein Testskript und ein Hilfsskript umfasst.

3. Geräte-QC-Verfahren nach Anspruch 2, ferner mit dem folgenden Schritt:
Konfigurieren aller Testpakete entsprechend einem oder mehreren Typen von Geräten zu einem Geräte-QC-Datenpaket.

4. Geräte-QC-Verfahren nach Anspruch 2 oder Anspruch 3, wobei eine grundlegende Information jedes vorgespeicherten Prüfpostens Folgendes umfasst:
Prüfposten-ID, Prüfpostentitel, Prüfpostenbeschreibung, Geräteversion, ID des übergeordneten Prüfpostens, Liste von IDs untergeordneter Prüfposten, Skriptmodulname und Name der Ausführungsschnittstellenfunktion.

5. Geräte-QC-Verfahren nach Anspruch 3, wobei das Testpaket Folgendes umfasst:
Testpakettitel, Testpaketbeschreibung, Geräteversion, Prüfposten, Skriptmodulname, Name der vorverarbeitenden Schnittstellenfunktion und Name der nachverarbeitenden Schnittstellenfunktion.

6. Geräte-QC-Verfahren nach Anspruch 5, wobei die Prozedur des Durchquerens aller vorgespeicherten Prüfposten, des Erhaltens der erforderlichen Prüfposten und des Ausführens der Geräte-QC anhand der erforderlichen Prüfposten Folgendes umfasst:
Schritt 2a: Vergleichen des erhaltenen Gerätemodells mit den in dem Geräte-QC-Datenpaket beschriebenen Gerätemodellinformationen und automatisches Auswählen des Testpakets, das mit den Gerätemodellinformationen übereinstimmt;
Schritt 2b: Setzen einer Laufumgebung des Testpakets gemäß einer vorverarbeitenden Schnittstellenfunktion in dem Testpaket;
Schritt 2c: Initialisieren des Testpakets, Setzen des Wurzelprüfpostens des Testpakets als einen aktuellen Prüfposten und Setzen der Weiterleitungskennung des Wurzelprüfpostens auf leer;
Schritt 2d: Prüfen, ob der aktuelle Prüfposten den Versionsinformationen entspricht; wenn dem so ist, schreitet die Prozedur zum Schritt 2e voran oder andernfalls zum Schritt 2h;
Schritt 2e: Ausführen der Ausführungsschnittstellenfunktion in dem aktuellen Prüfposten;
Schritt 2f: Prüfen, ob der aktuelle Prüfposten einen untergeordneten Prüfposten aufweist; wenn dem so ist, schreitet die Prozedur zum Schritt 2g voran oder andernfalls zum Schritt 2h;
Schritt 2g: Setzen der Weiterleitungskennung des untergeordneten Prüfpostens so, dass er zu dem aktuellen Prüfposten geleitet wird, und Setzen des untergeordneten Prüfpostens als den aktuellen Prüfposten; und dann Ausführen von Schritt 2d;
Schritt 2h: Prüfen, ob der aktuelle Prüfposten einen Bruderprüfposten aufweist; wenn dem so ist, schreitet die Prozedur zum Schritt 2i voran oder andernfalls zum Schritt 2j;
Schritt 2i: Setzen der Weiterleitungskennung des Bruderprüfpostens so, dass er zu dem aktuellen Prüfposten geleitet wird, Setzen des Bruderprüfpostens als den aktuellen Prüfposten; und dann Ausführen von Schritt 2d;
Schritt 2j: Prüfen, ob die Weiterleitungskennung des aktuellen Prüfpostens dem Bruderprüfposten des aktuellen Prüfpostens entspricht; wenn dem so ist, schreitet die Prozedur zum Schritt 2k voran; andernfalls Setzen des der Weiterleitungskennung entsprechenden Prüfpostens als den aktuellen Prüfposten und Ausführen von Schritt 21;
Schritt 2k: Zurückgeben des der Weiterleitungskennung des aktuellen Prüfpostens entsprechenden Prüfpostens und Setzen des der Weiterleitungskennung entsprechenden Prüfpostens als den aktuellen Prüfposten und nochmaliges Ausführen von Schritt 2j;
Schritt 21: Prüfen, ob die Weiterleitungskennung des aktuellen Prüfpostens leer ist; wenn dem so ist, schreitet die Prozedur zum Schritt 2m voran oder andernfalls zum Schritt 2h; und
Schritt 2m: Aufräumen der Laufumgebung gemäß der nachverarbeitenden Schnittstellenfunktion in dem Testpaket.

7. Qualitätsprüf- bzw. QC-Vorrichtung für Geräte, umfassend:
eine Informationserhaltungseinheit, die dafür ausgelegt ist, automatisch nach IP-Adressen der zu prüfenden Geräte zu suchen; gemäß den IP-Adressen eine Information über ein Modell und eine Version jedes zu prüfenden Geräts zu erhalten;
eine Setz- und Speichereinheit, die dafür ausgelegt ist, alle vorgespeicherten Prüfposten einer oder mehrerer Versionen entsprechend einem Modell des zu prüfenden Geräts zu einem Testpaket zu konfigurieren;
eine Durchquerungseinheit, die dafür ausgelegt ist, alle vorgespeicherten Prüfposten gemäß dem Modell und der Version des Geräts zu durchqueren und die erforderlichen Prüfposten zu erhalten; und
eine QC-Ausführungseinheit, die dafür ausgelegt ist, die Geräte-QC anhand der Prüfposten auszuführen;
**dadurch gekennzeichnet, dass** in jedem Testpaket der Setz- und Speichereinheit Folgendes geschieht: Setzen einer spezifizierten Ebene für jeden der vorgespeicherten Prüfposten; Setzen eines Prüfpostens entsprechend der obersten Ebene eindeutig als einen Wurzelprüfposten; Setzen eines Prüfpostens auf einer beliebigen Ebene, die niedriger als die oberste Ebene ist, als einen untergeordneten Prüfposten des Prüfpostens der oberen Ebene; Setzen der Versionsinformationen eines beliebigen untergeordneten Prüfpostens als eine Teilmenge der Versionsinformationen seines übergeordneten Prüfpostens; mit Ausnahme des Wurzelprüfpostens kann jeder vorgespeicherte Prüfposten höchstens einen übergeordneten Prüfposten aufweisen.

8. Geräte-QC-Vornchtung nach Anspruch 7, wobei:
die Setz- und Speichereinheit ferner für Folgendes ausgelegt ist: Setzen und Speichern aller für Geräte-QC erforderlichen Prüfposten, wobei jeder Prüfposten grundlegende Informationen, ein Testskript und ein Hilfsskript umfasst; Konfigurieren aller Testpakete entsprechend einem oder mehreren Typen von Geräten zu einem Geräte-QC-Datenpaket.

## Revendications

1. Procédé de contrôle de la qualité, QC, d'un équipement comprenant :
la configuration d'éléments de contrôle mémorisés à l'avance d'une ou de plusieurs versions correspondant à un modèle d'équipement à tester dans un jeu de tests ;
la recherche automatique d'adresses au protocole IP d'équipements à contrôler,
la récupération d'un modèle et d'une version de chaque équipement devant être contrôlé, en fonction des adresses au protocole IP, et
le balayage de la totalité des éléments de contrôle mémorisés à l'avance en fonction du modèle et de la version de l'équipement, la récupération d'éléments de contrôle requis, ainsi que l'exécution d'un contrôle de qualité de l'équipement par rapport aux éléments de contrôle requis,
**caractérisé en ce que** : dans chacun des jeux de tests, l'organisation par ordre hiérarchique des éléments de contrôle mémorisés à l'avance comprend en outre :
l'établissement d'un niveau spécifié pour chacun des éléments de contrôle mémorisés à l'avance, l'établissement d'un élément de contrôle correspondant de manière unique au niveau maximum des éléments de contrôle mémorisés à l'avance comme étant l'élément de base du contrôle, l'établissement d'un élément de contrôle sur chaque niveau inférieur au niveau maximum des éléments de contrôle mémorisés à l'avance comme étant un élément enfant de contrôle de l'élément de contrôle de niveau supérieur, l'établissement d'informations sur la version d'un quelconque élément enfant de contrôle comme étant un sous-ensemble des informations sur la version de son élément parent de contrôle, dans lequel, à l'exception de l'élément de base de contrôle, chaque élément de contrôle mémorisé à l'avance peut posséder au plus un élément parent de contrôle.

2. Procédé de contrôle de la qualité, QC, d'un équipement selon la revendication 1, dans lequel chacun des éléments de contrôle mémorisés à l'avance comprend des informations de base, une séquence type de test et une séquence type auxiliaire.

3. Procédé de contrôle de la qualité, QC, d'un équipement selon la revendication 2, comprenant en outre :
la configuration de tous les jeux de tests correspondant à un ou à plusieurs types d'équipements dans un jeu de données de contrôle de la qualité d'équipements.

4. Procédé de contrôle de la qualité, QC, d'un équipement selon l'une quelconque des revendications 2 et 3, dans lequel des informations de base de chaque élément de contrôle mémorisé à l'avance comprennent : un identificateur de l'élément de contrôle, le titre de l'élément de contrôle, la description de l'élément de contrôle, la version de l'équipement, l'identificateur de l'élément parent de contrôle, la liste des identificateurs des éléments enfants de contrôle, le nom du module de la séquence type et le nom de la fonction interface d'exécution.

5. Procédé de contrôle de la qualité, QC, d'un équipement selon la revendication 3, dans lequel le jeu de tests comprend : le titre du jeu de tests, la description du jeu de tests, la version de l'équipement, l'élément de contrôle, le nom du module de la séquence type, le nom de la fonction interface de prétraitement et le nom de la fonction interface de post-traitement.

6. Procédé de contrôle de la qualité, QC, d'un équipement selon la revendication 5, dans lequel la procédure consistant à balayer la totalité des éléments de contrôle mémorisés à l'avance, à récupérer les éléments de contrôle requis et à exécuter le contrôle de qualité de l'équipement par rapport aux éléments de contrôle requis comprend :
l'étape 2a : comparer le modèle d'équipement obtenu aux informations sur le modèle d'équipement qui sont décrites dans le jeu de données de contrôle de la qualité d'équipements, et sélectionner automatiquement le jeu de tests qui correspond aux informations sur le modèle de l'équipement,
l'étape 2b : conformément à une fonction interface de prétraitement dans le jeu de tests, établir un environnement d'exécution du jeu de tests,
l'étape 2c : initialiser le jeu de tests, établir l'élément de base de contrôle du jeu de tests comme étant l'élément actuel de contrôle, et établir l'identificateur amont de l'élément de base de contrôle comme étant vide,
l'étape 2d : contrôler si l'élément actuel de contrôle correspond aux informations sur la version, et si c'est le cas, la procédure se poursuit à l'étape 2e ou sinon à l'étape 2h,
l'étape 2e : exécuter la fonction interface d'exécution dans l'élément actuel de contrôle,
l'étape 2f : contrôler si l'élément actuel de contrôle possède un élément enfant de contrôle, et si c'est le cas, la procédure se poursuit à l'étape 2g ou sinon à l'étape 2h,
l'étape 2g : établir l'identificateur amont de l'élément enfant de contrôle comme devant être dirigé vers l'élément actuel de contrôle, ainsi qu'établir l'élément enfant de contrôle comme étant l'élément actuel de contrôle, puis exécuter l'étape 2d,
l'étape 2h : contrôler si l'élément actuel de contrôle possède un élément frère de contrôle, et si c'est le cas, la procédure se poursuit à l'étape 2i ou sinon à l'étape 2j,
l'étape 2i : établir l'identificateur amont de l'élément frère de contrôle comme devant être dirigé vers l'élément actuel de contrôle, établir l'élément frère de contrôle comme étant l'élément actuel de contrôle, puis exécuter l'étape 2d,
l'étape 2j : contrôler si l'identificateur amont de l'élément actuel de contrôle correspond à l'élément frère de contrôle de l'élément actuel de contrôle, et si c'est le cas, la procédure se poursuit à l'étape 2k, sinon, établir l'élément de contrôle correspondant à l'identificateur amont comme étant l'élément actuel de contrôle et exécuter l'étape 21,
l'étape 2k : renvoyer l'élément de contrôle correspondant à l'identificateur amont de l'élément actuel de contrôle et établir l'élément de contrôle correspondant à l'identificateur amont comme étant l'élément actuel de contrôle, puis exécuter de nouveau l'étape 2j,
l'étape 21 : contrôler si l'identificateur amont de l'élément actuel de contrôle est vide, et
si c'est le cas, la procédure se poursuit à l'étape 2m ou sinon à l'étape 2h, et
l'étape 2m : nettoyer l'environnement d'exécution conformément à la fonction d'interface de post-traitement dans le jeu de tests.

7. Appareil de contrôle de la qualité, QC, d'un équipement comprenant :
une unité de récupération d'informations, conçue pour rechercher automatiquement les adresses au protocole IP des équipements à contrôler ; et en fonction des adresses au protocole IP, pour récupérer des informations sur un modèle et une version de chaque équipement à contrôler,
une unité de réglage et de mémorisation, conçue pour configurer dans un jeu de tests tous les éléments de contrôle mémorisés à l'avance d'une ou de plusieurs versions correspondant à un modèle de l'équipement à tester,
une unité de balayage, conçue pour balayer tous les éléments de contrôle mémorisés à l'avance en fonction du modèle et de la version de l'équipement, et pour récupérer les éléments de contrôle requis, et
une unité d'exécution d'un contrôle de qualité, QC, conçue pour exécuter le contrôle de qualité de l'équipement par rapport aux éléments de contrôle,
**caractérisé en ce que** : dans chaque jeu de tests de l'unité de réglage et de mémorisation, l'appareil établit un niveau spécifié pour chacun des éléments de contrôle mémorisés à l'avance, il établit un élément de contrôle correspondant de manière unique au niveau maximum comme étant l'élément de base du contrôle, il établit un élément de contrôle sur chaque niveau inférieur au niveau maximum comme étant un élément enfant de contrôle de l'élément de contrôle de niveau supérieur, il établit les informations de version de chaque élément enfant de contrôle comme étant un sous-ensemble des informations de version de son élément parent de contrôle ; à l'exception de l'élément de base de contrôle, tout élément de contrôle mémorisé à l'avance pouvant posséder au plus un élément parent de contrôle.

8. Appareil de contrôle de la qualité, QC, d'un équipement selon la revendication 7, dans lequel :
l'unité de réglage et de mémorisation est en outre conçue pour établir et mémoriser tous les éléments de contrôle requis pour le contrôle de qualité de l'équipement, chaque élément de contrôle comprenant des informations de base, une séquence type de test et
une séquence type auxiliaire, et pour configurer tous les jeux de tests correspondant à un ou plusieurs types d'équipement dans un jeu de données de contrôle de qualité d'équipements.
